(19) Europäisches Patentamt
European Patent Office
Office européen des brevets

(11) Veröffentlichungsnummer: **0 060 984**
**B1**

(12) # EUROPÄISCHE PATENTSCHRIFT

(45) Veröffentlichungstag der Patentschrift: **19.06.85**

(51) Int. Cl.[4]: **C 07 F 9/14,** C 07 F 9/20, C 07 F 9/42

(21) Anmeldenummer: **82100894.3**

(22) Anmeldetag: **08.02.82**

(54) **Verfahren zur Herstellung von Cyanoalkylphosphorsäureesterchloriden.**

(30) Priorität: **21.02.81 DE 3106497**

(43) Veröffentlichungstag der Anmeldung: **29.09.82 Patentblatt 82/39**

(45) Bekanntmachung des Hinweises auf die Patenterteilung: **19.06.85 Patentblatt 85/25**

(84) Benannte Vertragsstaaten: **AT BE CH DE FR GB IT LI NL**

(56) Entgegenhaltungen:
**DE - B - 1 224 307**
**DE - C - 1 047 776**
**US - A - 2 965 533**

**Chemical Abstracts Band 84, Nr. 11, 15. März 1976, Columbus, Ohio, USA**
**HOUBEN-WEYL "Methoden der organischen Chemie", Band XII/2, 4. Auflage**

(73) Patentinhaber: **BAYER AG, Konzernverwaltung RP Patentabteilung, D-5090 Leverkusen 1 Bayerwerk (DE)**

(72) Erfinder: **Krüger, Bernd-Wieland, Dr., Sillerstrasse 49, D-5600 Wuppertal 11 (DE)**
Erfinder: **Riebel, Hans-Jochem, Dr., In der Beek 92, D-5600 Wuppertal 1 (DE)**
Erfinder: **Hammann, Ingeborg, Dr., Belfortstrasse 9, D-5000 Köln (DE)**
Erfinder: **Homeyer, Bernhard, Dr., Obere Strasse 28, D-5090 Leverkusen 3 (DE)**
Erfinder: **Stendel, Wilhelm, Dr., In den Birken 55, D-5600 Wuppertal 1 (DE)**

**EP 0 060 984 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von Cyanoalkylphosphorsäureesterchloriden, welche als Zwischenprodukte zur Herstellung von pestiziden Phosphorsäurederivaten verwendet werden können.

Es ist bereits bekannt, daß man bestimmte petizide Phosphorsäurecyanhydrinester erhält, wenn man entsprechende Phosphorsäureesterchloride mit Cyanhydrinen ($\alpha$-Hydroxycarbonsäurenitrilen) umsetzt (vergl. deutsche Auslegeschriften 1 047 776 und 1 224 307). Diese Herstellungsmethode ist jedoch wegen des Fehlens geeigneter Ausgangsverbindungen bzw. wegen unbefriedigender Herstellungsmöglichkeiten hierfür nur begrenzt anwendbar. Es besteht daher Bedarf an einem neuen Verfahren zur Herstellung von Zwischenprodukten für Phosphorsäurecyanhydrinester.

Es wurde nun gefunden, daß man neue Cyanoalkylphosphorsäureesterchloride der Formel

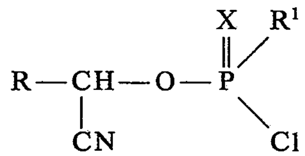

(I)

in welcher

R für Wasserstoff oder für einen gegebenenfalls substituierten Rest aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest steht,

$R^1$ für einen gegebenenfalls substituierten Rest aus der Reihe Alkyl, Alkenyl, Alkinyl, Aryl, Aralkyl, Alkoxy, Aryloxy, Aralkoxy, Alkylthio, Arylthio, Aralkylthio, Mono- oder Dialkylamino, Arylamino, Aralkylamino, Alkenylthio und Alkinylthio steht und

X für Sauerstoff oder Schwefel steht,

erhält, wenn man Phosphorsäuredichloride der Formel II

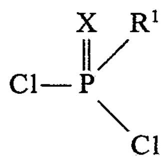

(II)

in welcher
$R^1$ und X die oben angegebene Bedeutung haben,
mit Aldehyden der Formel III

R–CHO (III)

in welcher
R die oben angegebene Bedeutung hat,
in Gegenwart angenähert äquimolarer Mengen wasserlöslicher Cyanide, in Gegenwart von Wasser und mit Wasser praktisch nicht mischbarer organischer Lösungsmittel und gegebenenfalls in Gegenwart eines Katalysators bei Temperaturen zwischen 0 und 80°C umsetzt.

Es ist als überraschend zu bezeichnen, daß man nach dem erfindungsgemäßen Verfahren die neuen Cyanoalkyl-phosphorsäureesterchloride in guten Ausbeuten und in hoher Reinheit erhält, da zu erwarten war, daß die Produkte der Formel (I) unter Substitution des Chloratoms weiter reagieren würden.

Als gegebenenfalls substituiertes Alkyl R und $R^1$ steht geradkettiges oder verzweigtes Alkyl mit 1 bis 20 vorzugsweise 1 bis 10, insbesondere 1 bis 5 Kohlenstoffatomen. Beispielhaft seien gegebenenfalls substituiertes Methyl, Ethyl, n- und i-Propyl, n-, i- und t-Butyl, genannt.

Als gegebenenfalls substituiertes Alkenyl R und $R^1$ und Alkenylthio $R^1$ steht geradkettiges oder verzweigtes Alkenyl bzw. Alkenylthio mit vorzugsweise 2 bis 5, insbesondere 2 bis 4 Kohlenstoffatomen. Beispielhaft seien gegebenenfalls substituiertes Ethenyl, Propenyl-(1), Propenyl-(2) und Butenyl-(3) sowie die entsprechenden Thio-Reste genannt.

Als gegebenenfalls substituiertes Alkinyl R und $R^1$ und Alkinylthio $R^1$ steht geradkettiges oder verzweigtes Alkinyl bzw. Alkinylthio mit vorzugsweise 2 bis 5, insbesondere 2 bis 4 Kohlenstoffatomen. Beispielsweise seien gegebenenfalls substituiertes Ethinyl, Propinyl-(1), Propinyl-(2) und Butinyl-(3) und die entsprechenden Thio-Reste genannt.

Als gegebenenfalls substituiertes Cycloalkyl R steht mono-, bi- und tricyclisches Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl, Cycloheptyl, Bicyclo[2,2,1]heptyl, Bicyclo[2,2,2]octyl und Adamantyl genannt.

Als gegebenenfalls substituiertes Cycloalkenyl R steht vorzugsweise monocyclisches Cycloalkenyl mit 5 oder 6 Kohlenstoffatomen und 1 oder 2 Doppelbindungen.

Als gegebenenfalls substituiertes Alkoxy $R^1$ steht geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n- und i-Propoxy und n-, i- und t-Butoxy genannt.

Als gegebenenfalls substituiertes Alkylthio $R^1$ steht geradkettiges oder verzweigtes Alkylthio mit vorzugsweise 1 bis 6, insbesondere 1 bis 4 Kohlenstoffatomen. Beispielhaft seien gegebenenfalls substituiertes Methylthio, Ethylthio, n- und i-Propylthio, n-, i- und t-Butylthio genannt.

Als gegebenenfalls substituiertes Aryl R und $R^1$ steht Aryl mit vorzugsweise 6 bis 10 Kohlenstoffatomen im Arylteil. Beispielhaft seien gegebenenfalls substituiertes Phenyl oder Naphthyl, insbesondere Phenyl genannt.

Als gegebenenfalls substituiertes Aralkyl R und $R^1$ steht gegebenenfalls im Arylteil und/oder Alkylteil substituiertes Aralkyl mit vorzugsweise 6 oder 10, insbesondere 6 Kohlenstoffatomen im Arylteil und vorzugsweise 1 bis 4, insbesondere 1 oder 2 Kohlenstoffatomen im Alkylteil, wobei der Alkylteil geradkettig oder verzweigt sein kann. Beispielhaft seien gegebenenfalls substituiertes Benzyl und Phenylethyl genannt.

Gegebenenfalls substituiertes Aralkenyl, R entspricht in seinem Arylteil dem Aralkylrest R. Es enthält im Alkenylteil vorzugsweise 2—6, insbesondere 2 oder 3 Kohlenstoffatome und 1 oder 2, vorzugsweise 1 Doppelbindung.

Gegebenenfalls substituiertes Aryloxy, Arylthio und Arylamino $R^1$ enthalten vorzugsweise 6 oder 10 Kohlenstoffatome im Arylteil, wobei Phenyloxy, Naphthyloxy, Phenylthio und Naphthylthio, Phenylamino und Naphthylamino, vorzugsweise Phenyloxy, Phenylthio und Phenylamino genannt seien.

Gegebenenfalls substituiertes Aralkoxy, Aralkylthio und Aralkylamino $R^1$ enthalten im Arylteil vorzugsweise 5 oder 10 Kohlenstoffatome, wobei Phenyl als besonders bevorzugt genannt sei. Der Alkylteil ist verzweigt oder geradkettig und enthält vorzugsweise 1 bis 4, insbesondere 1 oder 2 Kohlenstoffatome. Besonders bevorzugt ist als Aralkylteil der Benzylrest.

Im gegebenenfalls substituierten Alkylamino $R^1$ enthält die Aminogruppe 1 oder 2 Alkylgruppen welche jeweils geradkettig oder verzweigt sein können und vorzugsweise 1 bis 5, insbesondere 1 bis 3 Kohlenstoffatome enthalten, wobei Methyl, Ethyl, n- und i-Propyl genannt seien. Beispielhaft seien Monomethylamino und Dimethylamino aufgeführt.

Als gegebenenfalls substituierte heterocyclische Reste stehen heteroparaffinische, heteroaromatische und heteroolefinische 5- bis 7gliedrige, vorzugsweise 5- oder 6gliedrige Ringe mit vorzugsweise 1 bis 3, insbesondere 1 oder 2 gleichen oder verschiedenen Heteroatomen. Als Heteroatome stehen Sauerstoff, Schwefel oder Stickstoff. Als Beispiele seien gegebenenfalls substituierte Pyrrolidinyl, Piperidinyl, Furyl, Thienyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Azepinyl, Pyrrolyl, Pyridyl, Piperazinyl, Pyridazinyl, Pyrimidinyl, Pyrazinyl, 1,3,5-, 1,2,4- und 1,2,3-Triazinyl, 1,2,4-, 1,3,2-, 1,3,6- und 1,2,6-Oxazinyl, Oxepinyl, Thiepinyl und 1,2,4-Diazepinyl genannt.

Die in der Definition von R und $R^1$ genannten substituierten Reste können einen oder mehrere, vorzugsweise 1 bis 3, insbesondere 1 oder 2 gleiche oder verschiedene Substituenten tragen. Als Substituenten seien beispielhaft aufgeführt: Alkyl mit vorzugsweise 1 bis 4, insbesondere 1 oder 2 Kohlenstoffatomen, wie Methyl, Ethyl, n-und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Mono- und Dialkylamino mit jeweils 1 bis 4, vorzugsweise 1 oder 2 Kohlenstoffatomen je Alkylgruppe, wie Mono- und Dimethylamino oder Mono- und Diethylamino; Halogenalkyl, Halogenalkylthio und Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl, Trifluormethoxy und Trifluormethylthio, Halogen, vorzugsweise Fluor, Chlor, Brom und Jod, insbesondere Chlor und Brom; Nitro; Alkoxycarbonyl mit vorzugsweise 2 bis 4, insbesondere 2 oder 3 Kohlenstoffatomen, wie Methoxycarbonyl und Ethoxycarbonyl und Phenoxybenzyloxycarbonyl. Im Falle von Arylteilen enthaltenden Resten können die Arylteile, z. B. die Phenylringe durch Alkylendioxygruppen substituiert sein, welche vorzugsweise 1 bis 3, insbesondere 1 oder 2 Kohlenstoffatome enthalten und durch 1 bis 4 gleiche oder verschiedene Halogenatome (Fluor, Chlor, Brom und Jod) substituiert sein können.

Halogen bedeutet (wo nicht anders erläutert) Fluor, Chlor, Brom und Jod, vorzugsweise Fluor, Chlor und Brom.

Nach dem erfindungsgemäßen Verfahren erhält man vorzugsweise Verbindungen der Formel (I), in welcher

R für Wasserstoff oder für einen gegebenenfalls durch Halogen, $C_1$—$C_4$-Alkoxy, $C_1$—$C_4$-Alkylthio oder $C_1$—$C_4$-Alkylamino substituierten Alkylrest mit 1 bis 20 Kohlenstoffatomen, für gegebenenfalls durch Halogen substituiertes $C_2$—$C_5$-Alkenyl oder $C_2$—$C_5$-Alkinyl, für gegebenenfalls durch $C_1$—$C_4$-Alkyl, $C_2$—$C_4$-Alkoxycarbonyl, Phenoxybenzyloxycarbonyl und/oder Halogen substituiertes

$C_3$—$C_8$-Cycloalkyl, für gegebenenfalls durch Halogen, gegebenenfalls durch Halogen substituiertes $C_1$—$C_4$-Alkyl oder gegebenenfalls durch Halogen substituiertes $C_1$—$C_4$-Alkoxy substituiertes Phenyl-$C_1$—$C_4$—alkyl, für gegebenenfalls durch Halogen, Nitro, $C_1$—$C_4$-Alkyl, gegebenenfalls durch Halogen substituiertes $C_1$—$C_4$-Alkoxy, gegebenenfalls durch Halogen substituiertes $C_1$—$C_4$-Alkylthio, Trifluormethyl und/oder durch gegebenenfalls halogen-substituiertes $C_1C_2$-Alkylendioxy substituiertes Phenyl, für Furyl, Thienyl oder Pyridyl steht,

$R^1$ für einen gegebenenfalls durch Halogen substituierten Rest aus der Reihe $C_1$—$C_5$-Alkyl, $C_2$—$C_5$-Alkenyl, $C_2$—$C_5$-Alkinyl, Phenyl, Benzyl, $C_1$—$C_5$-Alkoxy, Phenoxy, Benzyloxy, $C_1$—$C_5$-Alkylthio, $C_2$—$C_5$-Alkenylthio, $C_2$—$C_5$-Alkinylthio, Phenylthio, Benzylthio, $C_1$—$C_5$-Mono- oder Dialkylamino, Phenylamino oder Benzylamino steht und

X für Sauerstoff oder Schwefel steht.

Die Erfindung betrifft insbesondere die Herstellung der neuen Zwischenprodukte der Formel (I), in welcher

R für Wasserstoff oder für einen gegebenenfalls durch Fluor, Chlor, Methoxy, Methylthio oder Dimethylamino substituierten Alkylrest mit 1 bis 10 Kohlenstoffatomen, für $C_2$—$C_5$-Alkenyl, für gegebenenfalls durch Chlor und/oder Methyl substituiertes $C_3$—$C_6$-Cycloalkyl, für gegebenenfalls durch Chlor oder Trifluormethoxy substituiertes Phenyl-$C_1$—$C_2$-alkyl, für gegebenenfalls durch Fluor, Chlor, Cyano, Nitro, Methyl, Methoxy, Trifluormethyl, Trifluormethoxy und/oder Methylendioxy substituiertes Phenyl, für Thienyl oder für Pyridyl steht,

$R^1$ für einen gegebenenfalls durch Fluor oder Chlor substituierten Rest aus der Reihe $C_1$—$C_5$-Alkyl, Phenyl, $C_1$—$C_5$-Alkoxy, Phenoxy, Benzyloxy, $C_1$—$C_5$-Alkylthio, Phenylthio, Benzylthio und $C_1$—$C_5$-Mono- oder Dialkylamino steht und

X für Sauerstoff oder Schwefel steht.

Halogen bedeutet Fluor, Chlor, Brom und Jod, vorzugsweise Fluor, Chlor und Brom.

Verwendet man beim erfindungsgemäßen Verfahren als Ausgangsstoffe beispielsweise Methanthiophosphonsäuredichlorid, Acetaldehyd und Natriumcyanid, so kann die Reaktion dieser Verbindungen durch folgendes Formelschema skizziert werden:

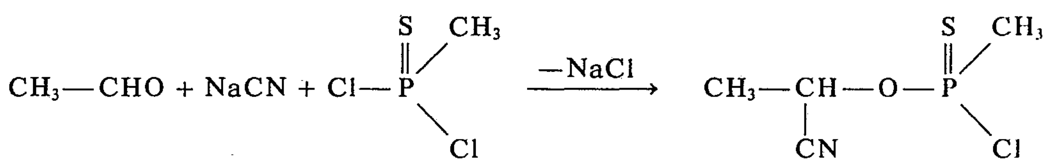


Die beim erfindunsgemäßen Verfahren als Ausgangsstoffe zu verwendenden Phosphorsäuredichloride sind durch Formel (II) definiert. In dieser Formel stehen X und $R^1$ vorzugsweise bzw. insbesondere für diejenigen Reste, welche oben bei der Definition der entsprechenden Reste in Formel (I) als bevorzugt bzw. als insbesondere bevorzugt angegeben sind.

Als Beispiele für die Verbindungen der Formel (II) seien genannt:

Methan-, Ethan-, Propan-, Butan- und Benzol-phosphonsäuredichlorid sowie die entsprechenden Thionoanalogen;

Methyl-, Ethyl-, n- und iso-Propyl-, n-, iso- und sec-Butyl-, Phenyl- und Benzyl-phosphorsäureesterdichlorid sowie die entsprechenden Thionoanalogen;

Methyl-, Ethyl-, n- und iso-Propyl-, n-, iso- und sec-Methyl-, Ethyl-, n- und iso-Propyl-, n-, iso- und sec-Butyl-, Phenyl- und Benzyl-thiol-phosphorsäureesterdichlorid sowie die entsprechenden Thionoanalogen.

Die Verbindungen der Formel (II) sind bekannt und/oder können in üblicher Weise nach an sich bekannten Verfahren hergestellt werden (vergleiche Methoden der organischen Chemie (Houben-Weyl-Müller), 4. Aufl., Band 12/1 (1963), S. 387—406 und S. 552—557; Band 12/2 (1964), S. 212—225, 590—594 und 682—683; Thieme-Verlag-Stuttgart).

Die weiter als Ausgangsstoffe zu verwendenden Aldehyde sind durch Formel (III) definiert. In dieser Formel steht R vorzugsweise bzw. insbesondere für diejenigen Reste, welche oben bei der Definition von R in Formel (I) als bevorzugt bzw. als insbesondere bevorzugt angegeben sind.

Als Beispiele für die Verbindungen der Formel (III) seien genannt:

Formaldehyd, Acetaldehyd, Propionaldehyd, Butyraldehyd, iso-Butyraldehyd, Valeraldehyd, iso-Valeraldehyd, sec-Valeraldehyd, Capronaldehyd, iso-Capronaldehyd, sec-Capronaldehyd, Pivalaldehyd, Acrolein, Crotonaldehyd, Methoxyacetaldehyd, Methylthioacetaldehyd, Cyclohexancarbaldehyd, Benzaldehyd, 4-Chlor-benzaldehyd, 4-Methylbenzaldehyd, 3,4-Methylendioxybenzaldehyd, 4,5-Methylendioxy-2-nitro-benzaldehyd, Phenylacetaldehyd, α-Phenylpropionaldehyd, Thiophen-2-aldehyd, Thiophen-3-aldehyd, Pyridin-2-aldehyd und Pyridin-3-aldehyd.

Die Ausgangsverbindungen der Formel (III) sind bekannt.

In Wasser lösliche Cyanide, welche beim erfindungsgemäßen Verfahren verwendet werden können, sind beispielsweise Alkalicyanide, wie Natriumcyanid und Kaliumcyanid; Natriumcyanid wird bevorzugt verwendet.

Als mit Wasser nicht mischbare Lösungsmittel werden beim erfindungsgemäßen Verfahren vorzugsweise geradkettige oder verzweigte Alkane oder Cycloalkane mit 5 bis 10 Kohlenstoffatomen, wie z. B. n-Pentan, n-Hexan, n-Heptan, n-Octan, n-Nonan, n-Decan, 2-Methylpentan, 3-Methylpentan, 2-Methylhexan, 2,2,4-Trimethylpentan, Cyclohexan, Methylcyclohexan, oder auch Methylbenzole, wie z. B. Toluol oder Xylole, sowie auch Gemische dieser Kohlenwasserstoffe eingesetzt.

Als Katalysatoren werden beim erfindungsgemäßen Verfahren vorzugsweise Verbindungen verwendet, welche gewöhnlich bei Reaktionen in Zweiphasensystemen aus Wasser und mit Wasser nicht mischbaren organischen Lösungsmitteln zum Phasentransfer von Reaktanden dienen. Als solche sind vor allem Tetraalkyl- und Trialkyl-aralkyl-ammoniumsalze mit vorzugsweise 1 bis 10, insbesondere 1 bis 8 Kohlenstoffen je Alkylgruppe, vorzugsweise Phenyl als Arylbestandteil der Aralkylgruppe und vorzugsweise 1 bis 4, insbesondere 1 oder 2 Kohlenstoffatomen im Alkylteil der Aralkylgruppen bevorzugt. Hierbei kommen vor allem die Halogenide, wie Chloride, Bromide und Jodide, vorzugsweise die Chloride und Bromide in Frage. Beispielhaft seien Tetrabutylammoniumbromid, Benzyl-triethylammoniumchlorid und Methyl-trioctylammoniumchlorid genannt.

Die Reaktionstemperatur wird beim erfindungsgemäßen Verfahren zwischen 0 und 80°C, vorzugsweise zwischen 0 und 30°C gehalten. Das Verfahren wird vorzugsweise bei Normaldruck durchgeführt.

Je Mol Phosphorsäuredichlorid der Formel (II) setzt man im allgemeinen zwischen 0,6 und 1,1 Mol, vorzugsweise 0,75 bis 1,0 Mol Aldehyd der Formel (III), zwischen 1,0 und 1,5 Mol, vorzugsweise 1,1 bis 1,3 Mol Cyanid und gegebenenfalls zwischen 0,001 und 0,05 Mol, vorzugsweise 0,01 bis 0,03 Mol Katalysator ein.

In einer bevorzugten Ausführungsform des erfindungsgemäßen Verfahrens werden die Ausgangsverbindungen der Formeln (II) und (III) sowie der Katalysator in dem mit Wasser nicht mischbaren Lösungsmittel gelöst und zu dieser Lösung wird langsam eine wäßrige Lösung des Cyanids gegeben, wobei gegebenenfalls zunächst durch Außenkühlung die Reaktionstemperatur auf etwa 0 bis 10°C gebracht wird. Das komplette Reaktionsgemisch wird dann mehrere Stunden bei Raumtemperatur gerührt.

Zur Aufarbeitung wird gegebenenfalls mit weiterem mit Wasser nicht mischbarem Lösungsmittel verdünnt, die organische Phase abgetrennt, mit Wasser gewaschen, getrocknet und filtriert. Das Filtrat wird durch Destillation unter vermindertem Druck vom Lösungsmittel befreit, wobei man das Rohprodukt als öligen Rückstand erhält.

Die nach dem erfindungsgemäßen Verfahren herzustellenden Cyanoalkyl-phosphorsäureesterchloride können als Zwischenprodukte zur Herstellung von pestizid wirksamen Phosphorsäurederivaten der Formel (IV)

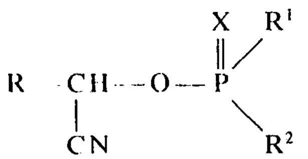

(IV)

in welcher

X, R und $R^1$ die oben angegebene Bedeutung haben und

$R^2$ für einen gegebenenfalls substituierten Rest aus der Reihe Alkoxy, Alkylthio und Alkylamino mit vorzugsweise 1 bis 5 Kohlenstoffatomen, Aryloxy, Arylthio und Arylamino mit vorzugsweise Phenyl als Arylteil und Aralkoxy, Aralkylthio und Aralkylamino mit vorzugsweise Phenyl als Arylteil und vorzugsweise 1 bis 5, insbesondere 1 oder 2 Kohlenstoffatomen im Alkylteil steht,

verwendet werden.

Man erhält die Cyanoalkyl-phosphorsäurederivate der Formel (IV) aus entsprechenden Verbindungen der Formel (I) durch Umsetzung mit Nucleophilen der Formel (V)

$$MR^2 \qquad (V)$$

in welcher

$R^2$ die oben angegebene Bedeutung hat und

M für Wasserstoff, Natrium, Kalium oder Ammonium steht, gegebenenfalls in Gegenwart von Säurebindemitteln, wie z. B. Triethylamin oder Kaliumcarbonat und gegebenenfalls in Gegenwart von Verdünnungsmitteln, wie z. B. Toluol oder Acetonitril, bei Temperaturen zwischen 10 und 100°C.

Zur Aufarbeitung wird gegebenenfalls mit einem mit Wasser praktisch nicht mischbaren organischen Lösungsmittel, wie z. B. Toluol oder Methylenchlorid, verdünnnt, mit Wasser gewaschen, getrocknet und filtriert. Nach Abdestillieren des Lösungsmittels unter vermindertem Druck enthält der Rückstand im wesentlichen die Produkte der Formel (IV).

Die Verbindungen der Formel IV können in Form allgemein üblichen Formulierungen z. B. Emulsionen, Lösungen, Pulver, Granulate usw. als Insektizide und Akarizide verwendet werden. Diese Formulierungen enthalten im allgemeinen zwischen 0,1 und 95 Gewichtsprozente Wirkstoff und übliche Streck- und Formulierhilfsmittel, wie organische Lösungsmittel, z. B. Xylol, Methylethylketon, natürliche Gesteinsmehle, wie Kaoline und oberflächenaktive Verbindungen, wie Alkylarylpolyglycolether. Die Wirkstoffkonzentrationen der fertigen Anwendungsformen liegen im allgemeinen zwischen 0,001 und 1 Gew.-%. Mit Hilfe der Verbindungen der Formel IV können Insekten und Akariden im Pflanzenschutz, in der Vorratshaltung und in der Tierhaltung bekämpft werden.

Die Herstellung der Verbindungen der Formel I soll durch die folgenden Beispiele erläutert werden.

Beispiel 1

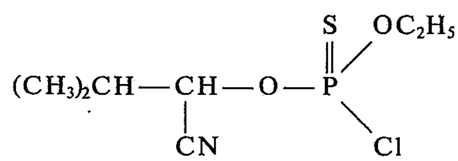

233 g (1,3 Mol) O-Ethyl-thiophosphorsäureesterdichlorid, 72 g (1,0 Mol) Isobutyraldehyd und 6 g Tetrabutylammoniumbromid werden in 1 l Hexan vorgelegt und bei einer Innentemperatur zwischen 0 und 5°C eine Lösung von 56 g (1,1 Mol) Natriumcyanid in 100 ml Wasser unter starkem Rühren zugetropft. Nach beendeter Zugabe wird die Temperatur langsam auf 20°C erhöht und das Gemisch wird noch 12 Stunden gerührt. Anschließend wird die wäßrige Phase abgetrennt, die organische Phase mit 100 ml Wasser gewaschen und mit Natriumsulfat getrocknet. Nach Abziehen des Lösungsmittels im Wasserstrahlvakuum und Abdestillieren des überschüssigen Ausgangsmaterials erhält man 173 g (72% der Theorie) O-Ethyl-O-(1-cyano-2-methyl-propyl)-thio-phosphorsäurediesterchlorid als öligen Rückstand vom Brechungsindex $n_D^{20}$ : 1,4806.

Analog Beispiel 1 können die in der nachstehenden Tabelle aufgeführten Verbindungen der Formel (I) hergestellt werden:

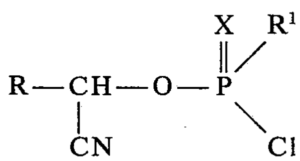

(I)

| Beispiel Nr. | R | $R^1$ | X | Brechungsindex ($n_D^{20}$) |
|---|---|---|---|---|
| 2 | 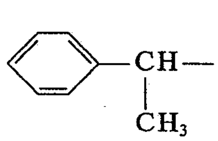 | $C_2H_5O$ | S | 1,5510 |
| 3 | $C_3H_7$-iso | n-$C_3H_7S$ | S | 1,4961 |
| 4 | 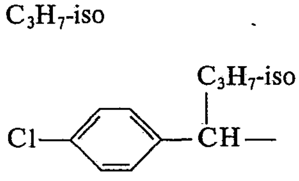 | $C_2H_5O$ | S | |
| 5 | 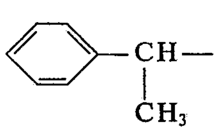 | n-$C_3H_7S$ | S | 1,5771 |

Fortsetzung

| Beispiel Nr. | R | $R^1$ | X | Brechungsindex ($n_D^{20}$) |
|---|---|---|---|---|
| 6 | 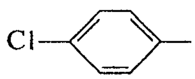 | $C_2H_5O$ | S | 1,5559 |
| 7 | 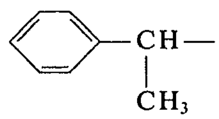 | $N(CH_3)_2$ | S | 1,5442 |
| 8 | $C_3H_7$-iso | $C_2H_5O$ | O | 1,4479 |
| 9 | $C_3H_7$-iso | 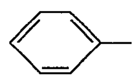 | S | 1,5586 |
| 10 | $C_3H_7$-iso | $-CH_3$ | S | 1,5046 |

Beispiel zur Herstellung von Verbindungen der Formel (IV)

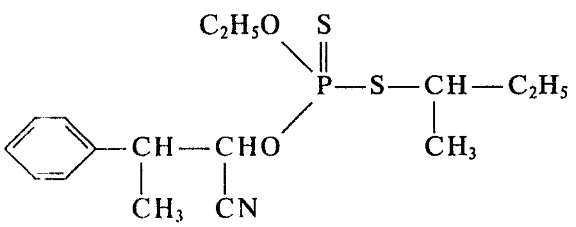

(1a)

12,3 g (0,11 Mol) Natrium-sec-butyl-mercaptid werden in 100 ml Acetonitril vorgelegt und langsam bei einer Innentemperatur von 0 bis 20°C 30,3 g (0,1 Mol) O-Ethyl-O-(1-cyano-2-phenyl-propyl)-thiophosphorsäurechlorid, gelöst in 40 ml Acetonitril, zugetropft. Man rührt 12 Stunden bei 60°C, engt die Mischung im Wasserstrahlvakuum ein und nimmt den Rückstand in Methylenchlorid auf. Dann wird die organische Phase zwei mal mit 50 ml verdünnter Natronlauge und zwei mal mit 50 ml Wasser gewaschen und anschließend mit Natriumsulfat getrocknet. Nach Abziehen des Lösungsmittels erhält man 22,3 g (62% der Theorie) O-Ethyl-O-(1-cyano-2-phenyl-propyl)-S-sec-butyl-dithiophosphat als öligen Rückstand mit dem Brechungsindex $n_D^{20}$ : 1,5600.

Analog erhält man

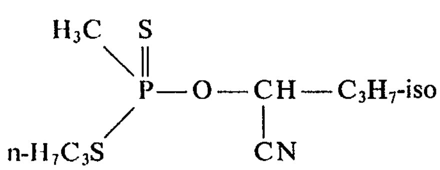

(2a)

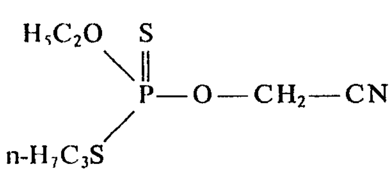

(3a)

Die übrigen Verbindungen der Formel IV können in analoger Weise erhalten werden.

**Patentansprüche**

1. Verfahren zur Herstellung von Cyanoalkylphosphorsäureesterchloriden der Formel I

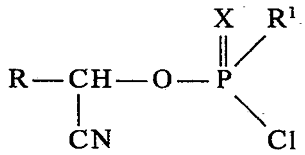

(I)

in welcher

R für Wasserstoff oder für einen gegebenenfalls substituierten Rest aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest steht,
$R^1$ für einen gegebenenfalls substituierten Rest aus der Reihe Alkyl, Alkenyl, Alkinyl, Aryl, Aralkyl, Alkoxy, Aryloxy, Aralkoxy, Alkylthio, Arylthio, Aralkylthio, Mono- oder Dialkylamino, Arylamino, Alkenylthio oder Alkinylthio, Aralkylamino steht und
X für Sauerstoff oder Schwefel steht,

dadurch gekennzeichnet, daß Phosphorsäuredichloride der Formel II

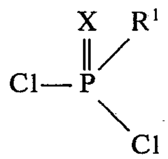

(II)

in welcher
$R^1$ und X die oben angegebene Bedeutung haben,
mit Aldehyden der Formel III

R–CHO (III)

in welcher
R die oben angegebene Bedeutung hat,
in Gegenwart angenähert äquimolarer Mengen wasserlöslicher Cyanide, in Gegenwart von Wasser und mit Wasser praktisch nicht mischbarer organischer Lösungsmittel und gegebenenfalls in Gegenwart eines Katalysators bei Temperaturen zwischen 0 und 80°C umsetzt.

2. Verfahren gemäß Anspruch 1, wobei in den Formeln (I), (II) und (III)

R für Wasserstoff oder für einen gegebenenfalls durch Halogen, $C_1$—$C_4$-Alkoxy, $C_1$—$C_4$-Alkylthio oder $C_1$—$C_4$-Alkylamino substituierten Alkylrest mit 1 bis 20 Kohlenstoffatomen, für gegebenenfalls durch Halogen substituiertes $C_2$—$C_5$-Alkenyl oder $C_2$—$C_5$-Alkinyl, für gegebenenfalls durch $C_1$—$C_4$-Alkyl, $C_2$—$C_4$-Alkoxycarbonyl, Phenoxybenzyloxycarbonyl und/oder Halogen substituiertes $C_3$—$C_8$-Cycloalkyl, für gegebenenfalls durch Halogen, gegebenenfalls durch Halogen substituiertes $C_1$—$C_4$-Alkyl oder gegebenenfalls durch Halogen substituiertes $C_1$—$C_4$-Alkoxy substituiertes Phenyl-$C_1$—$C_4$—alkyl, für gegebenenfalls durch Halogen, Nitro, $C_1$—$C_4$-Alkyl, gegebenenfalls durch Halogen substituiertes $C_1$—$C_4$-Alkoxy, gegebenenfalls durch Halogen substituiertes $C_1$—$C_4$-Alkylthio, Trifluormethyl und/oder durch gegebenenfalls halogen-substituiertes $C_1$—$C_2$-Alkylendioxy substituiertes Phenyl, für Furyl, Thienyl oder Pyridyl steht,
$R^1$ für einen gegebenenfalls durch Halogen substituierten Rest aus der Reihe $C_1$—$C_5$-Alkyl, $C_2$—$C_5$-Alkenyl, $C_2$—$C_5$-Alkinyl, Phenyl, Benzyl, $C_1$—$C_5$-Alkoxy, Phenoxy, Benzyloxy, $C_1$—$C_5$-Alkylthio, $C_2$—$C_5$-Alkenylthio, $C_2$—$C_5$-Alkinylthio, Phenylthio, Benzylthio, $C_1$—$C_5$-Mono- oder Dialkylamino, Phenylamino oder Benzylamino steht und
X für Sauerstoff oder Schwefel steht.

3. Verfahren gemäß Anspruch 1, wobei in den Formeln (I), (II) und (III)

R für Wasserstoff oder für einen gegebenenfalls durch Fluor, Chlor, Methoxy, Methylthio oder Dimethylamino substituierten Alkylrest mit 1 bis 10 Kohlenstoffatomen, für $C_2$—$C_5$-Alkenyl, für gegebenenfalls durch Chlor und/oder Methyl substituiertes $C_3$—$C_6$-Cycloalkyl, für gegebenenfalls durch Chlor oder Trifluormethoxy substituiertes Phenyl-$C_1$—$C_2$-alkyl, für gegebenenfalls durch Fluor, Chlor, Cyano, Nitro, Methyl, Methoxy, Trifluormethyl, Trifluormethoxy und/oder Methylendioxy substituiertes Phenyl, für Thienyl oder für Pyridyl steht,

$R^1$ für einen gegebenenfalls durch Fluor oder Chlor substituierten Rest aus der Reihe $C_1$—$C_5$-Alkyl, Phenyl, $C_1$—$C_5$-Alkoxy, Phenoxy, Benzyloxy, $C_1$—$C_5$-Alkylthio, Phenylthio, Benzylthio und $C_1$—$C_5$-Mono- oder Dialkylamino steht und

X für Sauerstoff oder Schwefel steht.

4. Verfahren gemäß den Ansprüchen 1 bis 3, wobei die Umsetzung in Gegenwart eines Katalysators erfolgt.

5. Verfahren gemäß Anspruch 4, wobei als Katalysator ein Tetraalkyl- oder Trialkyl-aralkyl-ammoniumsalz verwendet wird.

6. Verfahren gemäß Anspruch 5, wobei als Katalysator Tetrabutylammoniumbromid verwendet wird.

7. Verfahren gemäß den Ansprüchen 1 bis 6, wobei die Umsetzung bei Temperaturen zwischen 0 und 30°C vorgenommen wird.

**Claims**

1. Process for the preparation of cyanoalkylphosphoric acid ester chlorides of the formula I

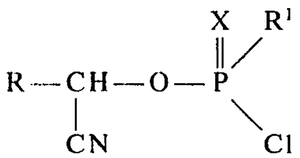

(I)

in which

R represents hydrogen or an optionally substituted radical from the series comprising alkyl, alkenyl, alkinyl, cycloalkyl, cycloalkenyl, aralkyl, aralkenyl and aryl, or an optionally substituted heterocyclic radical,

$R^1$ represents an optionally substituted radical from the series comprising alkyl, alkenyl, alkinyl, aryl, aralkyl, alkoxy, aryloxy, aralkoxy, alkylthio, arylthio, aralkylthio, mono- or dialkylamino, arylamino, alkenylthio or alkinylthio, and aralkylamino and

X represents oxygen or sulphur,

characterised in that phosphoric acid dichlorides of the formula II

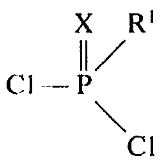

(II)

in which

$R^1$ and X have the abovementioned meaning,

are reacted with aldehydes of the formula III

R–CHO (III)

in which

R has the abovementioned meaning,

in the presence of approximately equimolar quantities of water-soluble cyanides, in the presence of water and organic solvents which are virtually immiscible with water, and if appropriate in the presence of a catalyst at temperatures between 0 and 80°C.

2. Process according to Claim 1, wherein in the formulae (I), (II) and (III),

R represents hydrogen or an alkyl radical which has 1 to 20 carbon atoms and is optionally substituted by halogen, $C_1$—$C_4$-alkoxy, $C_1$—$C_4$-alkylthio or $C_1$—$C_4$-alkylamino, optionally halogen-substituted $C_2$—$C_5$-alkenyl or $C_2$—$C_5$-alkinyl, $C_3$—$C_8$-cycloalkyl which is optionally substituted by $C_1$—$C_4$-alkyl, $C_2$—$C_4$-alkoxycarbonyl, phenoxybenzyloxycarbonyl and/or halogen, phenyl-$C_1$—$C_4$-alkyl which is optionally substituted by halogen, optionally halogen-substituted $C_1$—$C_4$-alkyl or optionally halogen-substituted $C_1$—$C_4$-alkoxy, phenyl which is optionally substituted by halogen, nitro, $C_1$—$C_4$-alkyl, optionally halogen-substituted $C_1$—$C_4$-alkoxy, optionally halogen-substituted $C_1$—$C_4$-alkylthio, trifluoromethyl and/or by optionally halogen-substituted $C_1$—$C_2$-alkylenedioxy, furyl, thienyl or pyridyl,

$R^1$ represents an optionally halogen-substituted radical from the series comprising $C_1$—$C_5$-alkyl,

$C_2$—$C_5$-alkenyl, $C_2$—$C_5$-alkinyl, phenyl, benzyl, $C_1$—$C_5$-alkoxy, phenoxy, benzyloxy, $C_1$—$C_5$-alkylthio, $C_2$—$C_5$-alkenylthio, $C_2$—$C_5$-alkinylthio, phenylthio, benzylthio, $C_1$—$C_5$-mono- or dialkylamino, phenylamino or benzylamino, and

X represents oxygen or sulphur.

3. Process according to Claim 1, wherein in the formulae (I), (II) and (III),

R represents hydrogen or an alkyl radical which has 1 to 10 carbon atoms and is optionally substituted by fluorine, chlorine, methoxy, methylthio or dimethylamino, $C_2$—$C_5$-alkenyl, $C_3$—$C_6$-cycloalkyl which optionally substituted by chlorine and/or methyl, phenyl-$C_1$—$C_2$-alkyl which is optionally substituted by chlorine or trifluoromethoxy, phenyl which is optionally substituted by fluorine, chlorine, cyano, nitro, methyl, methoxy, trifluoromethyl, trifluoromethoxy and/or methylenedioxy, thienyl or pyridyl,

$R^1$ represents an optionally fluorine-substituted or chlorine-substituted radical from the series comprising $C_1$—$C_5$-alkyl, phenyl, $C_1$—$C_5$-alkoxy, phenoxy, benzyloxy, $C_1$—$C_5$-alkylthio, phenylthio, benzylthio and $C_1$—$C_5$-mono- or dialkylamino and

X represents oxygen or sulphur.

4. Process according to Claims 1 to 3, wherein the reaction is carried out in the presence of a catalyst.

5. Process according to Claim 4, wherein a tetraalkyl- or trialkyl-aralkyl-ammonium salt is used as the catalyst.

6. Process according to Claim 5, wherein tetrabutylammonium bromide is used as the catalyst.

7. Process according to Claims 1 to 6, wherein the reaction is carried out at temperatures between 0 and 30°C.

## Revendications

1. Procédé de fabrication de chlorures d'esters cyanoalcoylés d'acide phosphorique de formule I:

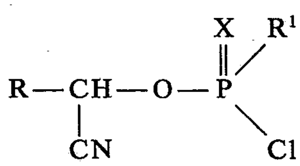

(I)

dans laquelle

R représente de l'hydrogène ou un radical éventuellement substitué de la série alcoyle, alcényle, alcinyle, cycloalcoyle, cycloalcényle, aralcoyle, aralcényle et aryle ou un radical hétérocyclique éventuellement substitué,

$R^1$ un radical éventuellement substitué de la série alcoyle, alcényle, alcinyle, aryle, aralcoyle, alcoxy, aryloxy, aralcoxy, alcoylthio, arylthio, aralcoylthio, mono- ou dialcoylamino, arylamino, alcénylthio ou alcinylthio, aralcoylamino et

X de l'oxygène ou du soufre,

caractérisé en ce qu'on fait réagir des dichlorures d'acide phosphorique de formule II

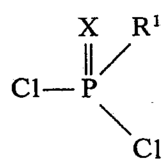

(II)

dans laquelle
$R^1$ et X ont la signification indiquée plus haut,
avec des aldéhydes de formule III

R–CHO (III)

dans laquelle
R a la signification indiquée plus haut,
en présence de quantités sensiblement équimolaires de cyanures solubles dans l'eau, en présence d'eau et de solvants organiques pratiquement non miscibles avec l'eau et éventuellement en présence d'un catalyseur à des températures entre 0 et 80°C.

2. Procédé selon la revendication 1 dans lequel, dans les formules (I), (II) et (III):

R représente de l'hydrogène ou un radical alcoyle ayant 1 à 20 atomes de carbone éventuellement substitué par de l'halogène, un alcoxy($C_1$—$C_4$), alcoylthio($C_1$—$C_4$) ou alcoyl($C_1$—$C_4$)amino, un alcényle($C_2$—$C_5$) ou alcinyle($C_2$—$C_5$) éventuellement substitué par de l'halogène, un cycloalcoyl-($C_3$—$C_8$)-eventuellement substitué par un alcoyle($C_1$—$C_4$), alcoxy($C_2$—$C_4$)carbonyle, phénoxybenzyloxycarbonyle et/ou de l'halogène, un phényl-alcoyle($C_1$—$C_4$) éventuellement substitué par de l'halogène, alcoyle($C_1$—$C_4$) substitué éventuellement par de l'halogène ou alcoxy($C_1$—$C_4$) éventuellement substitué par de l'halogène, un phényle éventuellement substitué par de l'halogène, nitro, alcoyle($C_1$—$C_4$), alcoxy($C_1$—$C_4$) éventuellement substitué par de l'halogène, alcoyl($C_1$—$C_4$)thio éventuellement substitué par de l'halogène, trifluorométhyle et/ou par un alcoylène($C_1$—$C_2$)dioxy éventuellement substitué par de l'halogène, un furyle, thiényle ou pyridyle,

$R^1$ représente un radical éventuellement substitué par de l'halogène de la série alcoyle($C_1$—$C_5$), alcényle($C_2$—$C_5$), alcinyle($C_2$—$C_5$), phényle, benzyle, alcoxy en $C_1$—$C_5$, phénoxy, benzyloxy, alcoyl-($C_1$—$C_5$)thio, alcényl($C_2$—$C_5$)thio, alcinyl($C_2$—$C_5$)thio, phénylthio, benzylthio, mono ou dialcoyl-($C_1$—$C_5$)amino, phénylamino ou benzylamino et

X de l'oxygène ou du soufre.

3. Procédé selon la revendication 1, dans lequel, dans les formules (I), (II) et (III):

R représente de l'hydrogène ou un radical alcoyle, éventuellement substitué par du fluor, chlore, méthoxy, méthylthio ou diméthylamino, ayant 1 à 10 atomes de carbone, un alcényle en $C_2$—$C_5$, un cycloalcoyle en $C_3$—$C_6$ éventuellement substitué par du chlore et/ou du méthyle, un phénylalcoyle($C_1$—$C_2$) éventuellement substitué par du chlore ou trifluorométhoxy, un phényle éventuellement substitué par du fluor, chlore, cyano, nitro, méthyle, méthoxy, trifluorométhyle, trifluorométhoxy et/ou méthylènedioxy, un thiényle ou un pyridyle,

$R^1$ un radical éventuellement substitué par du fluor ou du chlore de la série alcoyle($C_1$—$C_5$), phényle, alcoxy($C_1$—$C_5$), phénoxy, benzyloxy, alcoyl($C_1$—$C_5$)-thio, phénylthio, benzylthio et mono- ou dialcoyl($C_1$—$C_5$) amino et

X de l'oxygène ou du soufre.

4. Procédé selon les revendications 1 à 3, caractérisé en ce que la réaction se fait en prèsence d'un catalyseur.

5. Procédé selon la revendication 4, caractérisé en ce qu'on utilise comme catalyseur un sel de tétralcoyl- ou trialcoyl-aralcoyl-ammonium.

6. Procédé selon la revendication 5, caractérisé en ce qu'on utilise comme catalyseur du bromure de trétrabutyl-ammonium.

7. Procédé selon les revendications 1 à 6, caractérisé en ce que la réaction est effectuée à des températures entre 0 et 30°C.